# EUROPÄISCHE PATENTSCHRIFT

(11) **EP 2 876 339 B1**
(45) Veröffentlichungstag und Bekanntmachung des Hinweises auf die Patenterteilung: **13.06.2018**
(21) Anmeldenummer: 14190954.9
(22) Anmeldetag: 29.10.2014
(51) Int. Cl.: F16K 27/12, F24D 19/10, F24D 19/00

(54) **Einbauanordnung für eine Ventilarmatur und Ventilarmatur für eine Niedertemperaturheizung**
Built in assembly for a valve fitting and valve fitting for a low temperature heating system
Système de construction pour un robinet à soupape et robinet à soupape pour un chauffage basse température

(30) Priorität: 29.10.2013 DE 102013221994
(43) Veröffentlichungstag der Anmeldung: 27.05.2015
(73) Patentinhaber: TECE GmbH, 48282 Emsdetten (DE)
(72) Erfinder: Altepost, Olaf, 48282 Emsdetten (DE); Beermann, Michael, 48282 Emsdetten (DE); Beike, Christian, 48282 Emsdetten (DE); Fitz, Waldemar, 48268 Greven (DE); van Goer, Jens, 48607 Ochtrup (DE); Dropmann, Simon, 48151 Münster (DE); Krabbe, Krabbe, 48341 Altenberge (DE); Lösing, Andreas, 48282 Emsdetten (DE); Smit, Frank, 48432 Rheine (DE); Tippel, Andreas, 48282 Emsdetten (DE); Löckemann, Rainer, 48369 Saerbeck (DE); Schäfer, Matthias, 96465 Neustadt bei Coburg (DE); Neumann, Uwe, 65189 Wiesbaden (DE); Lechner, Michael, 96269 Großheirath (DE)
(74) Vertreter: Lippert Stachow Patentanwälte Rechtsanwälte

(56) Entgegenhaltungen:
- EP-A1- 0 119 503
- EP-A1- 2 180 101
- EP-A2- 1 102 145
- DE-A1- 1 475 643
- DE-A1- 2 910 833
- DE-A1- 3 625 131
- DE-A1- 10 130 924
- DE-A1- 10 148 796
- DE-A1-102011 076 210
- DE-B3- 10 312 366
- DE-B3-102004 058 353
- DE-C1- 10 119 589
- DE-U1-202009 016 394
- DE-U1-202011 108 342
- GB-A- 2 312 037
- GB-A- 2 450 700
- GB-A- 2 458 185
- US-A- 4 654 900
- US-A1- 2009 145 493

## Beschreibung

Die Erfindung betrifft eine Einbauanordnung für den Einbau einer Ventilarmatur umfassend ein Thermostatventil, dessen Regler durch eine Öffnung eines Verschlussdeckels hindurchragt, insbesondere für eine Niedertemperaturheizung mit einem Rücklauftemperaturventil bzw. Rücklauftemperaturbegrenzer, häufig auch einfach als RTL-Ventil bezeichnet, zum Begrenzen der Rücklauftemperatur der Niedertemperaturheizung und einem stromabwärts in Reihe zu dem Rücklauftemperaturventil angeordneten Thermostatventil.

Bauseitig wird eine solche Ventilarmatur häufig in einem Gehäuse eingebaut, welches durch eine abnehmbare Abdeckung verschließbar ist. Das Thermostatventil der Ventilarmatur ist mittels eines in der Abdeckung drehbeweglich angeordneten Stellelements einstellbar, vorzugsweise ausgebildet als Drehregler. Das Gehäuse zur Aufnahme der an die Leitungen der Heizung angeschlossenen Ventilarmatur wird häufig einfach als RTL- oder Einbaubox bezeichnet.

Eine solche Ventilarmatur ist beispielsweise aus der DE 10 2005 043 255 B3 bekannt. In einem derartigen System strömt erhitztes Heizwasser aus einem Heizkessel in einen Zulauf für das Heizmedium der Ventilarmatur mit einer Vorlauftemperatur von ca. 70° Grad Celsius in das System ein und wird verteilt an einen Heizkörper sowie eine in einen Boden eingelassene Heizschleife, z.B. in einem Bad, wobei sich das Heizwasser unter Abgabe von Wärme an den Heizkörper und den Boden abkühlt. Schließlich durchströmt das abgekühlte Heizwasser die Ventilarmatur, innerhalb welcher das RTL-Ventil angeordnet ist. Das Regelelement im RTL-Ventil wird also durch das aus der Fußbodenheizschleife austretende und abgekühlte Heizwasser umströmt und regelt damit zunächst die aus dem System austretende Rücklauftemperatur indem es verhindert, dass die Temperatur innerhalb der Fußbodenheizschleife zu hoch wird, was zu Beschädigungen im Boden führen kann. Das RTL-Ventil erfasst also die Rücklauftemperatur des aus der Fußbodenheizschleife ausströmenden Wassers und regelt dessen Durchlaufgeschwindigkeit durch das System. Ein in Strömungsrichtung hinter dem RTL-Ventil, also stromabwärts angeordnetes Thermostatventil erfasst die Raumluft und regelt den Durchfluss zusätzlich in Abhängigkeit von dieser Raumluft. Dieses Thermostatventil ist üblicherweise direkt zugänglich und ohne Demontage einstellbar, wohingegen das RTL-Ventil üblicherweise in einer kastenartigen Box, einer sogenannten Einbaubox oder RTL-Box in einer Ausnehmung in der Wand in der Nähe des Fußbodens eingelassen ist und erst nach Demontage einer Abdeckung der Einbaubox zugänglich ist.

RTL- bzw. Einbauboxen zur Aufnahme der Ventilarmatur in Einbaulage werden üblicherweise beim Rohbau direkt in der Wand montiert und sind durch eine abnehmbare Abdeckung verschließbar. Der Regler des Thermostatventils ist für die Zugänglichkeit von außen drehbar in der Abdeckung aufgenommen, so dass dessen Vorstehen von der jeweiligen Einbausituation in der Fertiginstallation mit der aufgebrauchten Höhe des Putzes, des Wandbelags etc. abhängt, womit der Regler mehr oder weniger weit absteht, was mitunter aufwendige Nacharbeiten erforderlich macht. Um eine Anpassung an unterschiedliche Bausituationen zu ermöglichen, sind die verwendeten Thermostatköpfe ca. 65 mm und länger. Je nach Einbaulage und Putzdicke schauen heutige Regler zwischen ca. 50 mm und 70 mm aus der Wand heraus. Damit sich hier von den Proportionen ein stimmiges Bild ergibt, sind die heutigen Abdeckungen von RTL-Einbauboxen ca. 155 x 200 mm groß. Der Ventilkörper ist fest in der Einbaubox verbaut. Diese Nacharbeiten im Rahmen der Fein- oder Fertiginstallation sind zeitaufwendig. Nachteilig an bestehenden Einbauboxen ist insgesamt zudem deren schlechte Zugänglichkeit und Größe. Da solche Einbau RTL Ventile und deren Einbauboxen wegen ihrer Größe nicht dem Anspruch an das heutige Wohnungsdesign entsprechen, werden sie häufig an versteckten Positionen im Raum in der Nähe des Fußbodens positioniert.

Aus DE 10 2004 058 353 B3 ist ein Unterputzkasten mit Raumheizungsregler, insbesondere für Fußbodenheizungsanlagen, bekannt, bei dem der Sollwerteinsteller das Einstellelement eines Ferneinstellventils ist, das mit einem zwischen Kasten und Abdeckung angeordneten Rahmen lösbar verbunden und an die Ventilarmatur mittels eines Kapillarrohrs angeschlossen ist. Dadurch ergibt sich ein größerer Gestaltungsspielraum.

DE 20 2011 108 342 U1 offenbart einen Montagekasten für Regelarmaturen für Fußbodenheizungen, bestehend aus einem Ober- und einem darin verschiebbaren Unterteil. Die Armaturen können mittels einer in das Oberteil einsetzbaren Aufnahmevorrichtung nach der Rohbauphase angebracht werden.

DE 103 12 366 B3 beschreibt einen Unterputzkasten für Raumheizungsregler mit einem Deckel und einem zwischen unter diesem angeordneten Rahmen, wobei der Rahmen mit dem Kasten verschraubt ist und seine Schraublöcher als peripher verlaufende Langlöcher ausgebildet sind, sodass der Rahmen mit dem Deckel in seiner Ebene verdreht werden kann, wodurch eine ggf. verdrehte Montage des Kastens ausgeglichen werden kann. Ausgehend von diesem Stand der Technik liegt der Erfindung die Aufgabe zugrunde, diese Nachteile zumindest teilweise zu vermeiden und insbesondere eine Ventilarmatur sowie eine Einbaubox vorzusehen, die einfacher einzubauen und deutlich kleiner als bestehende Einbauboxen ist.

Diese Aufgabe wird gelöst durch eine Einbauanordnung nach Anspruch 1 und ein Einbauset nach Anspruch 8. Durch diese Ausgestaltung ist eine genaue Tiefeneinstellung der Abdeckplatte und des Thermostatkopfes bei der Feininstallation möglich, wenn also die genaue Dicke des Wandbelags einschließlich von Putz, Fliese oder sonstigem Wandbelag feststeht. Es hat sich bei der Entwicklung der Erfindung nämlich gezeigt, dass trotz exakter Vorplanung die genaue Bestimmung dieser Vorbaudicke praktisch nicht möglich ist, weil der Bauprozess immer individuellen Schwankungen unterworfen ist. So ist z.B. neben der Stärke der Fliesen auch die Ausführung der Fliesenverklebung relevant. Somit kann der Installateur trotz größter Mühe bei der Positionierung der Einbauboxen im Rohbau im Endeffekt bei der Feininstallation nie die korrekt auf die Einbaulage abgestimmte Ausrichtung erzielen. Die erfindungsgemäßen Einstellmittel erlauben also eine individuelle und genaue Anpassung der relativen Lage der Ventilarmatur im Gehäuse im Verhältnis zur Abdeckung unter Berücksichtigung der individuellen Gegebenheiten im Rahmen der Feininstallation.

Vorzugsweise umfasst das Einstellelement des Thermostatventils ein Dehnstoffelement mit einem Arbeitskolben, der bei Temperaturzunahme einen federbelasteten Ventilsitz verschließt, hierdurch den Heizwasserstrom regelt, bis die voreingestellte Temperatur am Fühlerelement bzw. Sensorelement wieder unterschritten wird. Anschließend kann sich durch die Volumenminderung im Dehnstoffelement das Ventil durch die Federlast wieder öffnen. Es stellt sich ein Regelkreis ein.

In einer Ausführungsform der Erfindung sind die Einstellmittel ausgebildet zur Anpassung der Lage des Ventilkörpers hinsichtlich seiner relativen Lage zur Abdeckung in dem Gehäuse bzw. der Einbaubox. Auch so kann der Abstand von Thermostatventilkopf zur Oberfläche der Wand im Rahmen der Feininstallation bedarfsgerecht eingestellt werden. Dieses wird erfindungsgemäß durch einen beweglichen Ventilkörper erzielt, vorzugsweise mittels eines einstellbaren Verbindungselements, angeordnet zwischen Ventilarmatur und Abdeckung. Die bevorzugte Ausführungsform sieht die Ausbildung des Verbindungselements als Einstellschrauben, besonders bevorzugt ergänzt um eine Distanzhülse vor. Diese Einstellschrauben sind in Einbaulage vorderseitig in die Abdeckung eingedreht und insofern zugänglich. Diese Einstellschrauben wirken mit ihrem distalen, hinteren Ende zur Einstellung der Ventilarmatur. Dieses kann entweder durch direkten Eingriff in Gewindelöcher der Ventilarmatur erfolgen oder durch Verwendung eines Halteelements für die Ventilarmatur. Bei der Verwendung des Haltelements ist die Ventilarmatur vorzugsweise lösbar mit dem Halteelement befestigt, z.B. mittels Befestigungsclips.

An dieser Ausführungsform ist besonders vorteilhaft, dass der Abstand zwischen Thermostatventilkopf und Abdeckung noch bei der Feininstallation individuell ein- und nachgestellt werden kann.

Zur Lagefixierung und Positionierung der Ventilarmatur können zwischen der Einbaubox und Ventilarmatur wirkende Lagefixierungsmittel vorgesehen sein. Bei der bevorzugten Ausführungsform umfassen diese Lagefixierungsmittel an der Innenseite des Gehäuses vorgesehene Führungsstifte, die vorzugsweise innenseitig einstückig angeformt sind und in die Armatur und/oder das Halteelement lagefixierend eingreifen.

Um die Beweglichkeit zu der Ventilarmatur in dem Gehäuse zu verbessern, erfolgt der Anschluss der Ventilarmatur an die Leitungen bzw. Rohre vorzugsweise über bewegliche Rohrleitungen. Hierzu kann weiter vorteilhaft eine verlängerte Rohbaubox verwendet werden, die einen tieferen, in Einbaulage oben gelegenen Ventilaufnahmeabschnitt und einen sich darunter anschließenden Rohrabschnitt geringerer Tiefe aufweist. Dieser Rohrabschnitt kann nach Anschluss der Ventilarmatur an die Leitungen zunächst mit einer Abdeckung vorderseitig verdeckt und verputzt werden. Die weitere Montage und Anordnung der Ventilarmatur wird dann nur mittels über den Ventilaufnahmeabschnitt der Einbaubox verwirklich, welche mit der Abdeckung bzw. einer Abdeckplatte zugänglich ist.

Ein weiterer Aspekt der Erfindung umfasst die Art und Weise der Verbindungstechnik der Ventilarmatur mit der Vorlauf-und der Rücklaufleitung. Der Stand der Technik umfasst bislang Schraub- oder Klemmverbindungen zur Verbindung der Ventilarmatur mit den aus der Wand oder dem Boden ragenden Leitungen. Das Lösen der Verbindungstechnik ist in dem beengten Bauraum der Einbaubox in Ecken und im Fußbodenbereich wegen der beschränkten Zugänglichkeit immer kompliziert. Zur Vereinfachung der Ventilarmatur bei der Erstmontage und Demontage für die Wartung wird ferner vorgeschlagen, die Enden der Leitungen mit in die Leitungen und die Ventilarmatur einsteckbare Fittings auszustatten, die dichtend lösbar mit der Ventilarmatur verbindbar sind.

Bei der bevorzugten Ausführungsform umfassen die Fittings doppelseitige Einsteckstutzen und einen vorzugsweise mittig zwischen den Einsteckstutzen radial quer zur Längsrichtung des Fittings abragenden und umlaufenden Anlageflansch. Die Einsteckstutzen auf der einen Seite des Fittings werden vorzugsweise unverlierbar mit einer Leitung und der gegenüberliegende Einsteckstutzen lösbar mit der Ventilarmatur verbunden. Die lösbare Befestigung des Fittings mit der Ventilarmatur erfolgt vorzugsweise über eine Klammer oder einen Splint, der in die Ventilarmatur so einsteckbar ist, dass er in Einbaulage den Einsteckstutzen des Fittings umgreift bzw. einklemmt. Auf diese Weise kann die Montage und Demontage sogar werkzeuglos erfolgen, jedenfalls werden keine beim Stand der Technik notwendigen Schlüssel für die Montage bzw. Demontage benötigt, was die Arbeiten in extrem beengten Bauräumen der Einbaubox erheblich vereinfacht.

Bei einer bevorzugten Weiterentwicklung sind die Einsteckstutzen ausgebildet zur Realisierung eines Versatzes bei der Einstellung der Ventilarmatur. Dieses erfolgt besonders bevorzugt durch eine Materialausnehmung, z.B. eine Nut, welche eine Bewegung in einem bestimmten Bereich von ca. 3 bis 5 mm ermöglicht. Diese Nut ist vorzugsweise an dem Einsteckstutzen vorgesehen, in welcher das in Einbaulage eingreifende Befestigungsmittel bewegbar ist. Somit wird vermieden, dass die Anschlussleitungen bei der Tiefeneinstellung unter Spannung geraten.

Eine bevorzugte Ausbildung der Einbaubox umfasst zudem Mittel zur Vermeidung einer übermäßigen Erhitzung des Raumes innerhalb der durch die Abdeckung verschlossenen Einbaubox im Betrieb. Bei der Entwicklung der Erfindung hat sich nämlich gezeigt, dass das durch die Ventilarmatur strömende Heizfluid häufig zu einer unverhältnismäßig starken Erwärmung des Innenraums innerhalb der geschlossenen Einbaubox führt, was einen ungewünschten Einfluss auf das wärmeempfindliche Dehnstoffelement innerhalb des Thermostatventils, das eigentlich die Raumlauft in dem zu heizenden Raum erfassen soll, bewirken kann, sodass dieses frühzeitig und ungewünscht schließt. Aus diesem Grund wird eine besondere Lüftungstechnik vorgeschlagen, welche eine zu starke Erwärmung innerhalb der Einbaubox verhindert. In der einfachsten Ausführungsform umfasst diese Lüftungstechnik Lüftungslöcher am oberen und unteren Ende der Abdeckung, welche aufgrund des Kamineffektes eine Durchströmung der Einbaubox mit Umgebungsluft ermöglicht. Bei einer nach außen geschlossenen Variante sind hingegen seitlich innerhalb der Einbaubox und in der Wand verlegte Luftzirkulationsleitungen vorgesehen, welche an unerkannter Stelle in den Raum münden, zum Beispiel in dem Bereich der Fußbodenleisten oder hinter Schränken. Alternativ zur Lüftung kann der Zwischenraum zwischen Thermostatventilkopf und Einbaubox gedämmt werden. Durch den verlangsamten Wärmeübergang zwischen Einbaubox und Thermostatventil sind Wärmeänderungen innerhalb der Einbaubox nicht maßgeblich im Vergleich zu den Wärmeänderungen im Raum.

Ein weiterer Aspekt der Erfindung ist die Ventilarmatur selbst. Wie eingangs geschildert, ist eine möglichst kleine Ausbildung der Einbaubox wünschenswert, damit diese nicht im Fußbereich bzw. am unteren Ende des Raums in versteckten Positionen angeordnet werden muss, wo diese immer schwierig zugänglich ist. Wünschenswert wäre die Anordnung im Bereich des einfachen Zugangs ähnlich wie ein normaler Lichtschalter, nur mit einem Drehregler zur Einstellung der gewünschten Temperatur. Bislang sind kombinierte RTL- und Thermostatventile in einer Ventilarmatur immer relativ groß, so dass diese wesentlich die Größe der Einbaubox zu dessen Aufnahme in der Wand bestimmen. Bei der Entwicklung der Erfindung hat sich aber gezeigt, dass das RTL-Ventil nicht wie bislang üblich, außenseitig auf der Ventilarmatur aufsitzen muss, also außerhalb des eigentlichen Armaturengehäuses angeordnet sein muss, sondern vielmehr in dieses Armaturengehäuse integriert sein kann, vorzugsweise in der Anströmseite einer Ventilarmatur. Damit ergibt sich eine die Möglichkeit der Reduzierung der Größe der Ventilarmatur um bis zu 60 Prozent im Vergleich zum Stand der Technik.

Vorzugsweise erstrecken sich die Anström- und Abströmseite des Armaturengehäuses der Ventilarmatur im Wesentlichen parallel zueinander und sind über einen Verbindungabschnitt miteinander verbunden, wobei der Verbindungsabschnitt vorzugsweise das Thermostatventil aufnimmt, besonders bevorzugt ist das Thermostatventil um 90 Grad versetzt zur Längserstreckungsrichtung des Armaturengehäuses, also auch zur Längserstreckungsrichtung des RTL-Ventils angeordnet, um die einfache Bedienbarkeit des Drehreglers für das Thermostatventil in Einbaulage zu gewährleisten.

Bei der besonders bevorzugten Ausführungsform ist das RTL-Ventil in die Abströmseite der Ventilarmatur aufgenommen und das Thermostatventil ist in einem Verbindungsabschnitt zwischen der Anström- und Abströmseite angeordnet. Üblicherweise ist das Armaturengehäuse als einstückig hergestellter Gusskörper ausgebildet.

Einen weiteren Aspekt der Erfindung stellt ein an die Ventilarmatur anschließbares Entlüftungsventil dar, mittels dessen eine Entlüftung des Heizkreislaufes vorgenommen werden kann.

Das Gehäuse der Einbaubox kann als im Wesentlichen rechteckiger Kasten mit einer Kantenlänge von ca. 100 x 80 mm ausgebildet sein. Bei einer Weiterentwicklung umfasst die Einbaubox einen im Wesentlichen würfelförmigen Ventilraum größerer Tiefe zur Aufnahme der Ventilarmatur, z.B. mit einer Tiefe von 100mm, und einen an diesen Ventilraum sich anschließenden längeren Anschlussraum geringerer Tiefe von z.B. 60 mm. Als besonders zweckmäßig hat sich ein Tiefenverhältnis von 1,5 bis 1,6 bei der Tiefe von Ventilzu Anschlussraum ergeben.

Die Erfindung betrifft insofern auch ein Einbauverfahren für den Einbau einer Ventilarmatur in einer zuvor beschriebenen Einbauanordnung. Dieses Verfahren umfasst zumindest die folgenden mit den Verfahrensschritte: Befestigen einer Einbaubox nach Anspruch 6 oder 7 an einer Wand im Rahmen einer Rohbauinstallation, Anschließen von Leitungen an die Ventilarmatur und Vorfixieren der Ventilarmatur in einem Ventilraum der Einbaubox in einer Vorfixierungsposition, Fertigstellen einer die Einbaubox umgebenden Wandoberfläche, Lösen der Ventilarmatur aus der Vorfixierungsposition, Vorsehen von Einstellmitteln zwischen Abdeckung und Ventilarmatur, Fixieren der Abdeckung an der Einbaubox, Feinausrichtung der Lage eines in Einbaulage durch die Abdeckung ragenden Stellelements der Ventilarmatur im Verhältnis zu der an der Einbaubox befestigten Abdeckung mittels der Einstellmittel. Die Verfahrensschritte können, müssen aber nicht zwangsläufig in dieser Reihenfolge ausgeführt werden.

Zur bauseitigen Anpassung kann die Einbaubox vor dem Fixieren der Abdeckung vorzugsweise gekürzt werden und ist vorzugsweise hierzu ausgebildet, z.B. mittels Sollbruchstellen. Die Wandoberfläche kann eine oder mehrere Lagen aus Putz, Trockenbauplatten, Tapete, Farbe, Fliese, Holz, Naturstein oder anderen Wandbedeckungen aufweisen. Weitere Einzelheiten, Vorteile und Merkmale der Erfindung lassen sich dem nachfolgenden Teil der Beschreibung entnehmen, in dem ein Ausführungsbeispiel der erfindungsgemäßen Vorrichtung anhand von sieben Zeichnungen näher erläutert wird. Es zeigen:

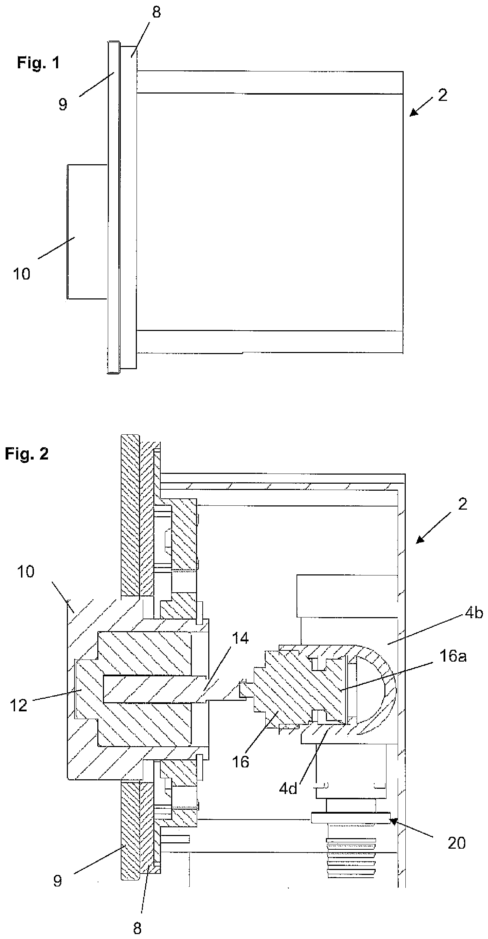

- Figur 1: eine Draufsicht der zusammengebauten Einbaubox;
- Figur 2: einen Querschnitt einer nicht erfindungsgemäßen Einbauanordnung eingebaut in die Einbaubox gemäß Figur 1;

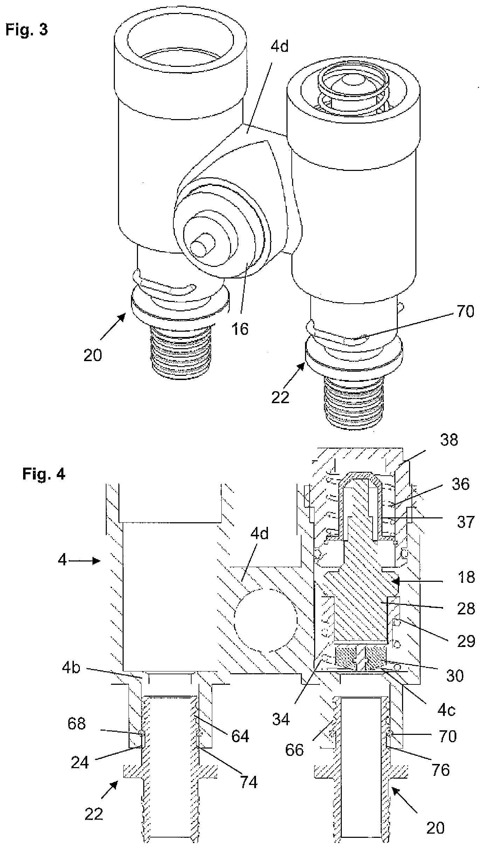

- Figur 3: eine Frontansicht der erfindungsgemäß verwendbaren Ventilarmatur;
- Figur 4: einen Längsschnitt (Vertikalschnitt) der Ventilarmatur gemäß Figur 3;
- Figur 5: einen Horizontalschnitt durch die Ventilarmatur gemäß Figur 3;
- Figur 6: einen Querschnitt des oberen Abschnitts einer Ausführungsform der Einbauanordnung eingebaut in eine abgewandelte Einbaubox;
- Figur 7: einen verkleinerten Querschnitt der gesamten Einbaubox gemäß Figur 6; und
- Figur 8: einen Querschnitt der in der Einbauanordnung vorfixierten Ventilarmatur in der Rohbauposition;
- Figur 9: einen Querschnitt der Einbauanordnung gemäß Figur 8 in Feinbauposition mit dickem Wandaufbau;
- Figur 10: einen Querschnitt der Einbauanordnung gemäß Figur 8 in Feinbauposition mit dünnem oder geringem Wandaufbau;
- Figur 11: einen vergrößerten Querschnitt durch das untere Anschlussende der Ventilarmatur 4 in Rohbauposition.

Gleiche oder entsprechende Bauteile sind der Einfachheit halber mit denselben Bezugszeichen versehen.

Demnach ist die erfindungsgemäß verwendbare Ventilarmatur 4 in einer kastenförmigen Einbaubox 2 in einer diese umgebenden Wand 6 in einer entsprechenden Ausnehmung eingelassen. Die vorderseitige Öffnung der Einbaubox ist durch eine plattenförmige und abnehmbare Abdeckung 8 verschließbar.

In der Abdeckung 8 ist ein kreiszylindrischer Drehknopf 10 drehbeweglich aufgenommen. Der als Aluminiumkörper ausgebildete Drehknopf 10 nimmt auf seiner Innenseite in einer zylindrischen Ausnehmung einen Dehnkörper 12, bzw. ein Dehnstoffelement auf, dessen nach innen ragender und längenveränderlicher Arbeitskolben 14 in Einbaulage gegen die Vorderseite eines Thermostatventilkörpers 16 drückt, der seinerseits in der Ventilarmatur 4 längsverschieblich geführt ist mit und je nach Einstellung des Drehknopfes 10 mehr oder weniger mit einem hinterseitigen Thermostatventilkegel 16a federgespannt gegen einen Thermostatventilsitz 4a der Ventilarmatur 4 anliegt und somit den Durchfluss des Heizmediums in Abhängigkeit der Umgebungstemperatur mehr oder weniger beschränkt, also regelt.

Die Ventilarmatur 4 umfasst in der vorliegenden Ausführungsform einen einstückig aus Messing geformten Grundkörper in der wesentlichen Gestalt eines H, mit zwei sich in einer Längsrichtung parallel zueinander erstreckende, als Ventilsitze 4b und 4c ausgebildete Längszylinder, die über einen sich quer zu dieser Längserstreckungsrichtung erstreckenden Verbindungsabschnitt 4d mit einer Durchgangöffnung einstückig miteinander verbunden sind.

Die Ventilsitze 4b und 4c weisen jeweils am unteren Ende einen ersten kreiszylindrischen Befestigungsabschnitt mit einem ersten geringeren Außen- und Innendurchmesser auf, der unter Bildung eines ersten Außen- und Innenabsatzes dann jeweils in einen sich an diesen darüber anschließenden Mittelabschnitt übergeht, welcher einen größeren Innen- und Außendurchmesser als der Befestigungsabschnitt aufweist und dann schließlich jeweils unter Bildung eines zweiten Außen-und Innenabsatzes in einen Oberabschnitt übergeht, dessen Innen- und Außendurchmesser wiederum jeweils größer sind als die Durchmesser des Mittelabschnitts. Die drei Abschnitte definieren somit die Ventilsitze 4b, 4c der Ventilarmatur 4 zur Aufnahme von Ventilen, insbesondere eines RTL-Ventils, von denen in den Figuren nur ein RTL-Ventil 18 in der Vorlaufseite der Ventilarmatur 4 angeordnet ist. Der in den Figuren rechtseitige Ventilsitz 4b ist durch einen oberseitig eingeschraubten Verschlussstopfen (nicht dargestellt) verschlossen.

Bei einer alternativen Ausführungsform kann anstelle des Verschlussstopfens 38 zum Zwecke der Entlüftung ein Entlüftungsventil vorgesehen sein.

Die Ventilarmatur 4 ist mit ihren unteren Befestigungsstutzen auf Fittings 20, 22 dichtend aufgesetzt, die vorliegend als Pressfittings ausgebildet über nicht näher dargestellte Pressverbindungen mit Kunststoffleitungen 24, 26 zur Führung des Heizmediums verbunden sind. Die Befestigung bzw. Fixierung der Fittings 20, 22 innerhalb der sich parallel zueinander erstreckenden, stutzenartig ausgebildeten unteren Befestigungsabschnitte der Ventilarmatur 4 erfolgt durch Einstecken von U-förmig gebogenen Klammern (Spannsplinten) 68, 70 in Öffnungen in der seitlichen Mantelfläche der Befestigungsabschnitte der Ventilarmatur 4. In Einbaulage sitzen diese Klammern 68, 70 hälftig in den inneren Mantelflächen der Befestigungsabschnitte und hälftig in den äußeren Mantelflächen der Fittings 20, 22, welche über O-Ringe dichtend gegenüber den Befestigungsstutzen der Ventilarmatur 4 aufgenommen sind.

Das durch die angeschlossene Rücklaufleitung 24 aus der Heizschleife im Boden strömende Heizwasser, mit einer Temperatur von ca. 45°, strömt somit bei dieser Einbausituation in den in den Figuren rechtsseitigen Ventilsitz 4c der Ventilarmatur 4 mit dem darin aufgenommenen RTL-Ventil 18, durchströmt bei geöffnetem RTL-Ventil 18 den Verbindungsabschnitt 4d und durch den in den Figuren linksseitigen Ventilsitz 4b schließlich durch die Leitung 26 zurück zum Heizkessel.

Das RTL-Ventil 18 umfasst demnach ein vom Heizwasser umströmtes Dehnstoffelement 28, welches an seinem unteren Ende mit einem Ventilkegel 30 auf einen innerhalb des Ventilsitzes 4b am unteren Ende des Mittelabschnitts an dem Absatz zum Übergang in den Befestigungsabschnitt ausgebildeten Ventilsitzes 32 wirkt. Das Dehnstoffelement 28 ist in eine topfartige Aufnahmehülse 29 mit oberseitigem Bund eingesetzt, gegen den eine diese Aufnahmehülse 29 umgebende untere Spiralfeder 34 oberseitig anliegt und deren Unterseite gegen den Absatz zwischen dem Mittelabschnitt und Befestigungsabschnitt des Ventilsitzes 4b aufliegt. Das Dehnstoffelement 28 ist auf den dem Ventilkegel 30 gegenüberliegenden oberen Ende in eine Anschlagkappe 31 eingesetzt, auf deren äußeren Flansch eine obere Spiralfeder 36 sitzt, die mit ihrer Oberseite gegen die Innenseite einer in dem Ventilsitz im oberen Abschnitt des Ventilsitzes 4c eingeschraubten Drehreglers 38 des RTL-Ventils drückt. Durch die somit in Reihe geschalteten Spiralfedern 36 und 34 kann durch Betätigung des Drehreglers 38 die Schließtemperatur des RTL-Ventils 18 besonders genau bedarfsgerecht eingestellt werden.

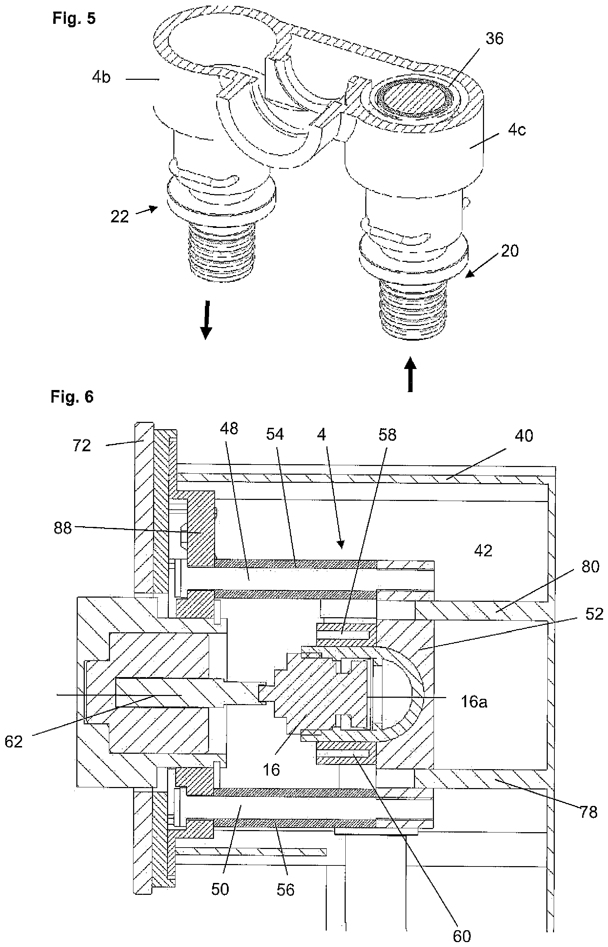

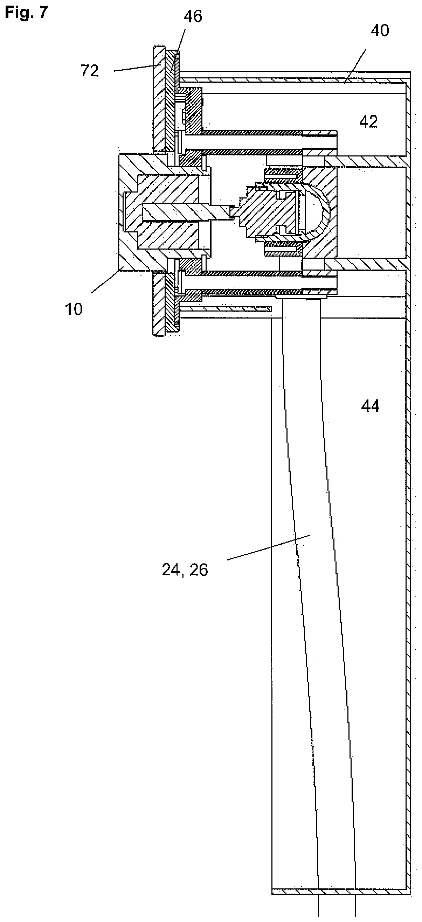

Die Figuren 6 und 7 zeigen eine Ausführungsform der Erfindung mit anders ausgebildeten Einstellmitteln, welche zwischen der Abdeckung 46 und der Ventilarmatur 4 wirken. Die Ventilarmatur 4 ist ansonsten aufgebaut wie bei der ersten Ausführungsform.

Während der Rohbauphase wird zunächst das Gehäuse 40 der Einbaubox in eine vorgefertigte Ausnehmung in der Wand 6 eingesetzt. Diese verlängerte Einbaubox weist einen in Einbaulage oberen kastenartigen Ventilraum 42 von mit einer Tiefe von ca. 100 mm zur beweglichen Aufnahme der Ventilarmatur 4 und einen unteren Anschlussraum 44 mit geringeren Tiefe von ca. 60 mm auf. Diese Abmessungen sind lediglich beispielhaft und nicht zwingend. Der Ventilraum 42 ist ausgebildet zur relativbeweglichen Aufnahme der Ventilarmatur 4 und der Anschlussraum 44 dient zum Anschluss der Leitungen 24, 26 an die Ventilarmatur 4 und vorzugsweise auch zur Minderung der Spannung in den Leitungen 24, 26, die beim Verschieben der Ventileinheit 4 auftreten könnte.

Beim Einbau werden die Leitungen 24, 26 zunächst über Fittings 20, 22 mit der Ventilarmatur 4 verbunden und dann auf Führungsstifte 78, 80 an der Innenseite des Ventilraums 42 mit einem Halter 52 für die Ventilarmatur 4 aufgeschoben in den Ventilraum 42. Sodann wird der untere Anschlussraum 44 mit einer unteren Abdeckung vorderseitig verdeckt und verputzt. Der obere Ventilraum 42 des Gehäuses steht weiterhin aus der verputzen Wand heraus.

Nach dem Verputzen der Wand und evtl. Aufbringen weiterer Wandbeläge wird der aus der Wand herausstehende Ventilraum 42 des Gehäuses 40 wandbündig abgeschnitten. Sodann wird die plattenförmige Abdeckung 46 frontseitig an dem oberen Ventilraum 42 des Gehäuses befestigt, z.B. mittels in den Ecken eingedrehter Schrauben. Unter der Abdeckung 46 kann ein zusätzlicher plattenförmiger Haltelement bzw. Einbaurahmen 88 angeordnet sein, welches eine frontseitige Senke zur Aufnahme der Schraubenköpfe der Einstellschrauben 48, 50 aufweisen kann.

Im nächsten Schritt wird die gesamte Ventilarmatur 4 mithilfe der zwei langen Einstellschrauben 48, 50 und den Halter 52 für die Ventilarmatur 4 mit Gewindelöchern für die Einstellschrauben 48, 50 an die die Einstellschrauben 48, 50 umschließende Distanzhülsen 54, 56 herangezogen, bis der durch die Distanzhülsen 54, 56 definierte Abstand zu der Abdeckung 46 genau realisiert ist. Durch Einsatz von Distanzhülsen 54, 56 verschiedener Länge sind Änderungen in der Dicke des Wandbelags kompensierbar, was auch eine nachträglich bedarfsgerechte Anpassung ermöglicht. Um ein Kippen der Ventilarmatur 4 zu verhindern, wird diese mit zwei frontseitig lösbar einsetzbaren Befestigungsclips 58, 60 an dem Halter 52 befestigt. Die auf der Innenseite des Dehnstoffelements im Drehknopf 10 aufgenommene Druckstange 62 weist eine feste Länge auf und drückt somit bei jeder Putzdicke bis 30 mm gleichmäßig stark auf den Thermostatventilkörper 16.

Zur Kompensation der Längenänderung der Leitungen 24, 26 bei dem Verschieben der Ventilarmatur 4 weisen die unteren Anschlussstücke 64, 66 jeweils eine Längsnut 74, 76 auf, die sich in Längsrichtung über etwa 5 mm auf den äußeren Mantelflächen der in Einbaulage oberen und in das untere Anschlussende der Ventilarmatur 4 eingesteckten Anschlussstücke 64, 66 erstreckt. Durch diese Maßnahme können sich die Anschlussstücke 64, 66 leicht vertikal verschieben, um die Änderung aufzufangen. Die Anschlussstücke 64, 66 werden aber auch bei dieser Ausführungsform mit Klammern68, 70 lösbar in der Ventilarmatur 4 gehalten.

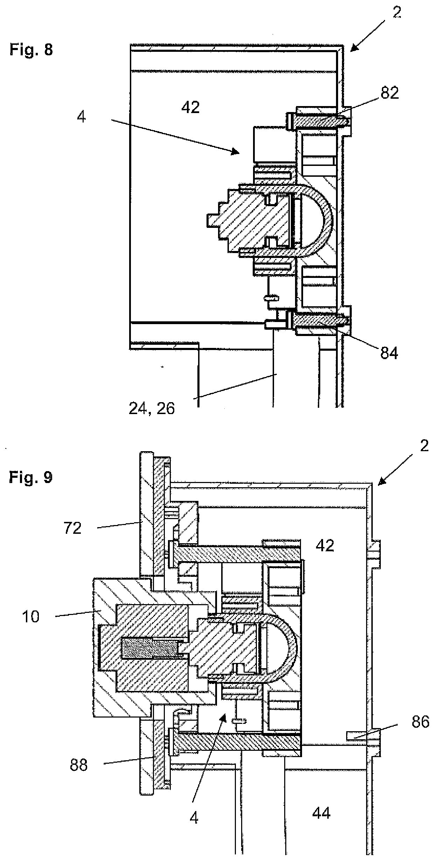

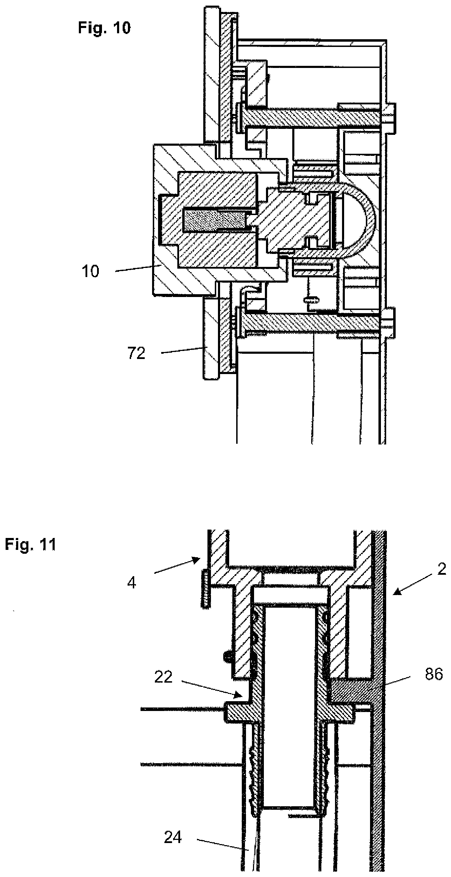

Die Figuren 8 und 11 zeigen die in die Einbaubox 2 eingesetzte Ventilarmatur 4 im Rohbau, also wenn die Einbaubox 2 entweder mit ihrer Rückseite mit einer nicht dargestellten Wand verschraubt oder in einer entsprechenden Wandöffnung eingesetzt ist. In dieser Rohbauposition ist die Ventilarmatur 4 mit zwei Fixierungsschrauben 82, 84 an der Rückseite der Einbaubox 2 verschraubt, so dass die Ventilarmatur 4 mit den daran befestigten Leitungen 24, 26 so gehalten wird, dass diese auf einem in den Innenraum der Einbaubox hineinragenden Auflagesteg 86 aufliegt bzw. aufsitzt.

In dieser Position dient der Auflagesteg 86 zudem gemäß der vergrößerten Darstellung in Figur 11 als Anschlag für die Leitungen 24, 26 in den für Fittings 20, 22. Der Auflagesteg 86 gewährleistet somit ein gewisses Herausstehen bzw. ein Spiel der Fittings 22, 24 in den beiden Einsatzstutzen am unteren Ende der Ventilarmatur 4 zur Realisierung des Vertikalversatzes der in die unteren Einsatzstutzen der Ventilarmatur 4 eingesetzten Armaturenstutzen 64, 66 der Fittings 20, 22 in vertikaler Richtung beim Überführen der Ventilarmatur 4 aus der Rohbau- in die Feinbauposition.

In der Figur 8 ist die Einbaubox in der vollen Länge dargestellt, in welche diese auch in gemäß der in Figur 9 dargestellten Ausführungsform mit dicken Wandaufbau verwendet wird, wenn also die Wanddicke mit Putz, Fliesen, Tapete usw. eine entsprechende Gesamtdicke aufweist. In dieser Feinbauposition wird die erfindungsgemäße Ventilarmatur 4 über die Einstellschrauben 48, 50, deren hintere Gewindeende in die Gewindelöcher für die Fixierungsschrauben 82, 84 eingreifen, in den korrekten Abstand zur Vorderebene der Blende 72 eingestellt.

Abschließend kann noch eine Blende 72, die gestalterisch an die Einbausituation angepasst ist, lösbar an der Abdeckung 46 befestigt werden, z.B. ausgebildet als eine aufsteckbare Glasblende.

Deutlich ist zu erkennen, dass der Drehknopf 10 trotz erheblich unterschiedlicher Wanddicken immer im gleichen Maß über die durch die Blende 72 definierte Frontebene hinausragt, was mit der erfindungsgemäßen Einstelleinrichtung erzielt wird.

Abstrahiert sieht die Erfindung eine Einbauanordnung mit Einstellmitteln vor, die das das bauseitige Einstellen der relativen Lage des Stellelements im Verhältnis zu einer die Einbauanordnung verschließenden Abdeckung in Abhängigkeit von der aufgebrachten Wanddicke in der Feinbauposition ermöglichen.

Vorzugsweise umfasst diese Einbauanordnung eine frontseitig offene, besonders bevorzugt kastenförmige Einbaubox, welche einen Ventilraum zur Aufnahme einer Ventilarmatur definiert und durch die Abdeckung verschließbar ist. Die zwischen der Abdeckung und dem Ventilkörper wirkenden, und frontseitig betätigbaren Einstellmittel erlauben die Ausrichtung der Ventilarmatur mit dem Stellelement im Verhältnis zu der eine Referenzlinie definierenden Abdeckung.

Bei der bevorzugten Ausführungsform umfassen die Einstellmittel mindestens eine in der Abdeckung eingesetzte Einstellschraube, die mit einem in den Ventilraum hineinragenden Hinterende in eine korrespondierendes Gewinde in der der Ventilarmatur oder einem Halter für die Ventilarmatur eingreift zur Feineinstellung.

Die Abdeckung kann ferner einen Einbaurahmen umfassen, der mindestens eine Öffnung zur Aufnahme der Einstellschraube und evtl. eine Senke aufweist, damit die frontseitige Designabdeckung auch bei eingesetzter Einstellschraube abstandslos aufsetzbar ist.

Allen Ausführungsformen ist gemein, dass der topfartig ausgebildete Drehknopf 10 zur Aufnahme des Dehnkörpers als einstückiges Metallteil, vorzugsweise aus Aluminium ausgebildet ist, welches nicht die beim Stand der Technik aus Kunststoff ausgebildeten Drehknöpfe erforderliche Kühlungsschlitze aufweist. Der Metallkörper des Drehknopfs ist ausreichend groß, um die auftretende Hitze bzw. Wärme abzuführen und Verfälschungen des Messergebnisses zu verhindern. Dieses lässt es somit zu, geschlossene Regelknöpfe vorzusehen, die optisch wie ein Lichtregler aussehen und deshalb gestalterisch ganz neue Möglichkeiten bieten. Bei einer alternativen Ausführungsform ist der Regelknopf das Dehnstoffelement, weist aus das Dehnstoffelement in sich auf.

Die Erfindung stellt damit erstmalig durch überraschend einfache ein Mittel eine Anpassung der genauen Lage einer in einer Einbaubox in einer Wand eingebauten Ventilarmatur bereit, deren Lage aufgrund der speziellen Einbausituation nie genau bestimmbar ist. Durch Vorsehen eines längenveränderlichen Verbindungselements, das vorzugsweise als Arbeitskolben oder zumindest dessen Verlängerung ausgebildet ist, kann die genaue Position der Ventilarmatur in der Einbaubox, der speziellen Einbausituation unter Berücksichtigung der Materialstärke des aufgebrachten Wandbelages und weiterer Bedingungen bei der Feininstallation optimal berücksichtigt werden, zur genau definierten Anordnung des in der Abdeckung angeordneten Drehknopfes, womit erstmalig höchsten designerischen Anforderungen bezüglich der Maßhaltigkeit entsprochen werden kann. Dieses kann z.B. durch Ablängen des Verbindungselements auf die erforderliche Länge oder durch Verwenden eines längenveränderlichen Verbindungselements erfolgen, welches z.B. eine Gewindestange umfasst, die in eine auf den Thermostatventilkörper aufsteckbare Aufsteckhülse eindrehbar und auf die erforderliche Länge fixierbar ist.

Darüber hinaus stellt die Erfindung eine besonders einfach zu montierende und demontierende Ventilarmatur bereit, die lediglich auf die an den Enden der Leitungen 24, 26 vorgesehene Fittings aufgesteckt und über Splinte in Einbaulage fixiert werden muss. Dieses kann sogar werkzeuglos erfolgen. Damit werden im Wesentlichen mit Standardbauteilen eine besonders einfache Montage und das Wechseln der Ventileinsätze im Wartungsfall ermöglicht; so ist die gesamte Ventilarmatur einfach komplett herausnehmbar.

Die Erfindung betrifft aber auch ein Einbauset umfassend eine Einbaubox, die eingangs beschriebene Ventilarmatur, Fittings zum Anschluss an die Leitungen einer Fußbodenheizung, eine Ventilarmatur sowie die erfindungsgemäßen Einstellmittel zur Anpassung der Ventilarmatur an die Einbaulage.

Für den Fachmann ist verständlich, dass die erfindungsgemäße Lösung nicht nur für eine Niedertemperaturheizung mit einem Rücklauftemperaturventil geeignet ist, sondern vielmehr bei jede Art von Heizung verwendbar ist, bei der die genaue Montage eines Stellelements im Verhältnis zu einer dieses umschließenden Abdeckplatte in einer Einbaubox zur Realisierung eines ästhetischen Eindrucks von Bedeutung ist.

Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

**Bezugszeichenliste**

| | | | |
|---|---|---|---|
| 2 | Einbaubox | 46 | Abdeckung |
| 4 | Ventilarmatur | 48 | Einstellschraube |
| 4a | Thermostatventilsitz | 50 | Einstellschraube |
| 4b | Ventilsitz | 52 | Halter |
| 4c | Ventilsitz | 54 | Distanzhülse |
| 4d | Verbindungsabschnitt | 56 | Distanzhülse |
| 8 | Abdeckung | 58 | Befestigungsclip |
| 9 | Blende | 60 | Befestigungsclip |
| 10 | Drehknopf | 62 | Druckstange |
| 12 | Dehnkörper | 64 | Anschlussstück |
| 14 | Arbeitskolben | 66 | Anschlussstück |
| 16 | Thermostatventilkörper | 68 | Klammer |
| 16a | Thermostatventilkegel | 70 | Klammer |
| 18 | RTL-Ventil | 72 | Blende |
| 20 | Fitting | 74 | Längsnut |
| 22 | Fitting | 76 | Längsnut |
| 24 | Leitung | 78 | Führungsstift |
| 26 | Leitung | 80 | Führungsstift |
| 28 | Dehnstoffelement | 82 | Fixierungsschraube |
| 29 | Aufnahmehülse | 84 | Fixierungsschraube |
| 30 | Ventilkegel | 86 | Auflagesteg |
| 31 | Anschlagkappe | 88 | Einbaurahmen |
| 32 | Ventilsitz | | |
| 34 | Untere Spiralfeder | | |
| 36 | Obere Spiralfeder | | |
| 38 | Drehregler | | |
| 39 | Verschlussstopfen | | |
| 40 | Gehäuse | | |
| 42 | Ventilraum | | |
| 44 | Anschlussraum | | |

## Patentansprüche

1. Einbauanordnung für eine Ventilarmatur (4), insbesondere für eine Ventilarmatur einer Niedertemperaturheizung, die ein Rücklauftemperaturventil und ein vorzugsweise stromabwärts in Reihe zum Rücklauftemperaturventil angeordnetes Thermostatventil aufweist, wobei die Einbauanordnung ein einen Ventilraum (42) zur Aufnahme der Ventilarmatur (4) definierendes Gehäuse umfasst, welches durch eine von der Einbauanordnung umfasste abnehmbare Abdeckung (46) verschließbar ist, wobei in einer Einbaulage die Abdeckung (46) das Gehäuse verschließt, wobei das Thermostatventil mittels eines in der Abdeckung (46) anordenbaren Stellelements einstellbar ist, **DADURCH GEKENNZEICHNET, dass** die Einbauanordnung Einstellmittel zur bauseitigen Anpassung der relativen Lage der Ventilarmatur (4) in dem Gehäuse im Verhältnis zu der Abdeckung (46) aufweist, wobei die Ventilarmatur in dem Gehäuse beweglich ist und die Einstellmittel ein einstellbares Verbindungselement zur Verbindung der Ventilarmatur (4) mit der Abdeckung (46) umfassen, das zwischen der Ventilarmatur und der Abdeckung angeordnet ist, so dass der in der Einbaulage zwischen der Abdeckung und der Ventilarmatur bestehende Abstand einstellbar ist.

2. Einbauanordnung nach Anspruch 1, **DADURCH GEKENNZEICHNET, dass** die Einstellmittel ferner einen Halter (52) für die Ventilarmatur (4) umfassen.

3. Einbauanordnung nach Anspruch 1 oder 2, **DADURCH GEKENNZEICHNET, dass** das Verbindungselement eine Distanzhülse (54, 56) umfasst.

4. Einbauanordnung nach einem der Ansprüche 1 bis 3, **DADURCH GEKENNZEICHNET, dass** zwischen dem Gehäuse und der Ventilarmatur (4) Lagefixierungsmittel ausgebildet sind.

5. Einbauanordnung nach einem der vorhergehenden Ansprüche, **DADURCH GEKENNZEICHNET, dass** das Stellelement aus Metall gefertigt ist und ausgebildet ist zur Aufnahme eines Dehnkörpers.

6. Einbauanordnung nach einem der vorhergehenden Ansprüche, **DADURCH GEKENNZEICHNET, dass** das Gehäuse als Einbaubox (2) ausgebildet ist.

7. Einbauanordnung nach Anspruch 6, **DADURCH GEKENNZEICHNET, DASS** die Einbaubox ferner einen Anschlussraum (44) zur Aufnahme von Leitungen (24, 26) umfasst.

8. Einbauset umfassend eine Einbauanordnung nach einem der Ansprüche 1 bis 7 und eine Ventilarmatur (4).

9. Einbauset nach Anspruch 8, ferner mindestens ein Fitting (20, 22) zur Verbindung der Ventilarmatur (4) mit einer Leitung (24, 26) umfassend, wobei das Fitting einen hohlzylindrischen und außenseitig mit einem Profil versehenen Stützkörper mit einem Leitungsende ausgebildet zur Verbindung mit der Leitung (24, 26) und einem dem Leitungsende gegenüber gelegenen Ventilende ausgebildet zum Einsetzen in einen Aufnahmestutzen der Ventilarmatur (4) aufweist, und wobei der Stützkörper ausgebildet ist zur Verwirklichung eines Relativversatzes des Fittings in der Ventilarmatur (4) bei der Einstellung der relativen Position der Ventilarmatur (4) in einer Einbauanordnung nach einem der Ansprüche 1 bis 7.

10. Einbauverfahren für den Einbau einer Ventilarmatur (4) in einer Einbauanordnung nach einem der Ansprüche 1 bis 7 mit den Verfahrensschritten: Befestigen einer Einbaubox (2) nach Anspruch 6 oder 7 an einer Wand im Rahmen einer Rohbauinstallation, Anschließen von Leitungen (24, 26) an die Ventilarmatur (4) mittels mindestens eines Fittings (20, 22) gemäß Anspruch 9, Vorfixieren der Ventilarmatur in einem Ventilraum (42) der Einbaubox (2) in einer Vorfixierungsposition, Fertigstellen einer die Einbaubox umgebenden Wandoberfläche, Lösen der Ventilarmatur (4) aus der Vorfixierungsposition, Vorsehen von Einstellmitteln zwischen Abdeckung (46) und Ventilarmatur (4), Fixieren der Abdeckung (46) an der Einbaubox (2), Feinausrichtung der Lage eines in Einbaulage durch die Abdeckung (46) ragenden Stellelements der Ventilarmatur (4) im Verhältnis zu der der an der Einbaubox (2) befestigten Abdeckung mittels der Einstellmittel.

11. Einbauverfahren nach Anspruch 10, **DADURCH GEKENNZEICHNET, DASS** die Einbaubox (2) vor dem Fixieren der Abdeckung gekürzt wird.

## Claims

1. Mounting structure for a valve fitting (4), in particular for a valve fitting for a low temperature heating system, that has a return temperature valve and a thermostatic valve arranged preferably downstream in series with the return temperature valve, wherein the mounting structure comprises a casing, that defines a valve space (42) for receiving the valve fitting (4), that can be closed by a removable cover (46) encompassed by the mounting structure, wherein the thermostatic valve can be adjusted by means of an adjusting element that can be placed in the cover (46), **characterized in that** the mounting structure has setting means for the on-site adaptation of the relative position of the valve fitting (4) in the casing relative to the cover (46), wherein the valve fitting (4) is movable in the casing, wherein the setting means comprise an adjustable connecting element for connecting the valve fitting (4) to the cover (46) so that, when the cover (46), the connecting element being arranged between the valve fitting (4) and the cover (46), is fixed to the casing, the relative position of the valve fitting (4) can be adapted relative to the cover (46).

2. Mounting structure according to claim 1, **characterized in that** the adjusting means further comprise a support (52) for the valve fitting (4).

3. Mounting structure according to claim 1 or 2, **characterized in that** the connecting element comprises a spacer sleeve (54, 56).

4. Mounting structure according to one of the claims 1 to 3, **characterized in that** positional fixing means are configured between the casing and the valve fitting (4).

5. Mounting structure according to one of the preceding claims, **characterized in that** the adjusting element is made of metal and is configured to receive an expanding body.

6. Mounting structure according to one of the preceding claims, **characterized in that** the casing is configured as a built-in box (2).

7. Mounting structure according to claim 6, **characterized in that** the built-in box further comprises a connecting space (44) for receiving cables (24, 26).

8. Mounting set comprising a mounting structure according to one of the claims 1 to 7 and a valve fitting (4).

9. Mounting set according to claim 8 further comprising at least one fitting piece (20, 22) for connecting the valve fitting (4) to a duct (24, 26), wherein the fitting piece has a hollow cylindrical supporting body being provided on the outer side with a profile with a duct end for connecting to the duct (24, 26) and a valve end situated opposite the duct end for inserting into a receiving socket of the valve fitting (4) and wherein the supporting body is configured for achieving a relative offset of the fitting piece in the valve fitting (4) when adjusting the relative position of the valve fitting (4) in a mounting structure according to one of the claims 1 to 7.

10. Mounting method for the mounting of a valve fitting (4) in a mounting structure according to one of the claims 1 to 7 with the method steps: fixing of a built-in box (2) according to claim 6 or 7 to a wall within a shell installation, connecting of ducts (24, 26) to the valve fitting (4) by means of at least one fitting piece (20, 22) according to claim 9, prefixing of the valve fitting in a valve space (42) of the built-in box (2) in a prefixing position, finishing of a wall surface that surrounds the built-in box, loosening of the valve fitting (4) from the prefixing position, providing of adjusting means between the cover (46) and the valve fitting (4), fixing of the cover (46) to the built-in box (2), fine adjustment of the position of an adjustment element of the valve fitting (4), that protrudes in built-in position off the cover (46), relative to the cover fixed to the built-in box (2) by means of the adjusting means.

11. Mounting method according to claim 10, **characterized in that** the built-in box (2) is shortened before fixing the cover.

## Revendications

1. Structure de montage pour un robinet à soupape (4), en particulier pour un robinet à soupape d'un chauffage à basse température, qui présente une vanne de température de retour et un robinet thermostatique placé de préférence en aval en série avec la vanne de température de retour, la structure de montage comprenant un boîtier, qui définit un espace de soupape (42) pour loger le robinet à soupape (4), qui peut être fermé par un recouvrement amovible (46) compris par la structure de montage, le robinet thermostatique pouvant être réglé au moyen d'un élément d'ajustement pouvant être placé dans le recouvrement (46), **caractérisée en ce que** la structure de montage présente des moyens de réglage pour l'adaptation sur site de la position relative du robinet à soupape (4) dans le boîtier par rapport au recouvrement (46), le robinet à soupape (4) étant movible dans le recouvrement (46), les moyens de réglage comprenant un élément de raccord réglable étant disposé entre le robinet à soupape (4) et le recouvrement pour relier le robinet à soupape (4) au recouvrement (46) si bien que, lorsque le recouvrement (46) est fixé au boîtier, la position relative du robinet à soupape (4) peut être adaptée par rapport au recouvrement (46).

2. Structure de montage selon la revendication 1, **caractérisée en ce que** les moyens de réglage comprennent de plus un support (52) pour le robinet à soupape (4).

3. Structure de montage selon la revendication 1 ou 2, **caractérisée en ce que** l'élément de raccord comprend une douille d'écartement (54, 56).

4. Structure de montage selon l'une des revendications 1 à 3, **caractérisée en ce que** des moyens de fixation de position sont agencés entre le boîtier et le robinet à soupape (4).

5. Structure de montage selon l'une des revendications précédentes, **caractérisée en ce que** l'élément d'ajustement est fabriqué en métal et est agencé pour loger un corps extensible.

6. Structure de montage selon l'une des revendications précédentes, **caractérisée en ce que** le boîtier est configuré comme un boîtier encastré (2).

7. Structure de montage selon la revendication 6, **caractérisée en ce que** le boîtier encastré comprend de plus un espace de raccordement (44) pour le logement de câbles (24, 26).

8. Ensemble de montage comprenant une structure de montage selon l'une des revendications 1 à 7 et un robinet à soupape (4).

9. Ensemble de montage selon la revendication 8 comprenant de plus au moins un raccord (20, 22) pour relier le robinet à soupape (4) à une conduite (24, 26), cependant que le raccord présente un corps de support en forme de cylindre creux étant pourvu d'un profilé sur le côté extérieur avec une extrémité de conduite pour le raccord à la conduite (24, 26) et une extrémité de soupape située en face de l'extrémité de conduite pour l'insertion dans un manchon de logement du robinet à soupape (4) et le corps de support étant agencé pour réaliser un décalage relatif du raccord dans le robinet à soupape (4) lors du réglage de la position relative du robinet à soupape (4) dans une structure de montage selon l'une des revendications 1 à 7.

10. Procédé de montage pour le montage du robinet à soupape (4) dans une structure de montage selon l'une des revendications 1 à 7 avec les étapes de procédé : fixation d'un boîtier encastré (2) selon la revendication 6 ou 7 à un mur dans le cadre d'une installation de gros-oeuvre, raccord de conduites (24, 26) au robinet à soupape (4) au moyen d'au moins un raccord (20, 22) selon la revendication 9, fixation préliminaire du robinet à soupape dans un espace de soupape (42) du boîtier encastré (2) dans une position de fixation préliminaire, finition d'une surface de mur qui entoure le boîtier encastré, desserrement du robinet à soupape (4) de la position de fixation préliminaire, fourniture de moyens de réglage entre le recouvrement (46) et le robinet à soupape (4), fixation du recouvrement (46) au boîtier encastré (2), réglage fin de la position d'un élément d'ajustement du robinet à soupape (4), élément d'ajustement qui, en position de montage, fait saillie du recouvrement (46), par rapport au recouvrement fixé au boîtier encastré (2) au moyen de moyens de réglage.

11. Procédé de montage selon la revendication 10, **caractérisé en ce que** le boîtier encastré (2) est raccourci avant la fixation du recouvrement.
